# EUROPÄISCHE PATENTANMELDUNG

(11) **EP 2 439 555 A1**
(43) Veröffentlichungstag der Anmeldung: **11.04.2012**
(21) Anmeldenummer: 12000005.4
(22) Anmeldetag: 27.01.2009
(51) Int. Cl.: G01S 17/08, G01S 17/89, G01C 15/00, G01S 7/481

(54) **Vorrichtung zum Bestimmen einer Entfernung zu einem Objekt**

(30) Priorität: 01.02.2008 DE 102008008063; 03.03.2008 DE 102008014275
(62) Teilanmeldung aus: 09706861.3
(71) Anmelder: Faro Technologies, Inc., Lake Mary, FL 32746-6204 (US)
(72) Erfinder: Ossig, Martin, 71732 Tamm (DE); Schumann, Philipp, 70469 Stuttgart (DE)
(74) Vertreter: Patentanwälte Hosenthien-Held und Dr. Held

(57) **Zusammenfassung**

Bei einer Vorrichtung zum Bestimmen einer Entfernung (d) zu einem Objekt (20), mit einem Lichtsender (12) zum Aussenden eines Sendelichtstrahls (18), mit einem Lichtempfänger (14) zum Empfangen eines Empfangslichtstrahls (24), der durch Reflexion des Sendelichtstrahls (18) an dem Objekt (20) entsteht, und mit einer Auswerteeinheit (16) zum Bestimmen der Entfernung (d) anhand einer Laufzeit des Sende- und Empfangslichtstrahls (18, 24), wobei der Lichtempfänger (14) eine Empfangsoptik (58) mit einem ersten Linsenelement (60), einer Lochblende (64) und einem im Querschnitt weitgehend hutförmiges zweites Linsenelement (62) zwischen dem ersten Linsenelement (60) und der Lochblende (64) mit einem Zentralbereich (84), einem Peripheriebereich (86) und einem Übergangsbereich (88) besitzt, und wobei ein lichtundurchlässiges Element (12) einen zentralen Bereich der Empfangsoptik (58) so abschattet, dass der Empfangslichtstrahl (24) in Form eines Lichtrings (102) auf die Lochblende (64) fällt, ist eine Maske (92) aus einem lichtundurchlässigen Material vorgesehen, die den Übergangsbereich (88) teilweise abdeckt und den Zentralbereich (84) freilässt, wobei die Maske (92) zumindest eine schlitzförmige Öffnung (110) besitzt, die im Übergangsbereich (88) angeordnet ist und vom Zentralbereich (84) zum Peripheriebereich (86) verläuft.

## Beschreibung

Die vorliegende Erfindung betrifft eine Vorrichtung zum Bestimmen einer Entfernung zu einem Objekt, mit den Merkmalen des Oberbegriffs des Anspruches 1.

Eine Vorrichtung zum Bestimmen einer Entfernung zu einem Objekt ist vom Prinzip her aus DE 20 2006 005 643 U1 bekannt, wobei diese Druckschrift allerdings keine Details einer Empfangsoptik offenbart. Vorrichtungen, wie sie in DE 20 2006 005 643 U1 beschrieben sind, einschließlich einer Empfangsoptik mit einer Lochblende und einem Linsenelement hat die Anmelderin der vorliegenden Erfindung jedoch bereits unter der Produktbezeichnung LS 840/880 vertrieben.

Die bekannte Vorrichtung ist ein so genannter Laserscanner, der dazu ausgebildet ist, einen Raumbereich und/oder ein Objekt dreidimensional zu vermessen. Typische Anwendungen beinhalten die Vermessung des Innenraums einer großen Werkhalle, die Vermessung von großen Objekten wie Gebäuden oder Schiffsrümpfen, oder die forensische Vermessung eines Tatortes. Der bekannte Laserscanner besitzt einen Messkopf, der um eine vertikale Achse drehbar ist. Der Messkopf enthält einen Rotor mit einem um 45° schräg gestellten Spiegel, der gegenüber von einem Lichtsender und einem Lichtempfänger angeordnet ist. Der Lichtsender erzeugt einen Sendelichtstrahl, der mit Hilfe des drehenden Spiegels so abgelenkt wird, dass ein vertikaler Abtastfächer entsteht. Ein von einem Objekt reflektierter Empfangslichtstrahl wird über den Spiegel auf den Lichtempfänger umgeleitet. Aus der Laufzeit des Sende- und Empfangslichtstrahls wird die Entfernung zwischen dem Messkopf und dem Objektpunkt bestimmt, an dem der Sendelichtstrahl reflektiert wurde. Durch Drehung des Messkopfes um die vertikale Achse lasst sich der (vertikale) Abtastfächer im Azimut drehen, so dass praktisch der gesamte Raumbereich um den Laserscanner herum vermessen werden kann.

DE 20 2006 005 643 U1 beschreibt eine vorteilhafte Kombination eines solchen Laserscanners mit einer Bildaufnahmeeinheit, die dazu ausgebildet ist, ein Farbbild von dem Raumbereich in Ergänzung zu den Entfernungsmesswerten aufzunehmen.

Ein bekanntes Problem bei einem solchen Laserscanner oder allgemeiner bei einem Entfernungsmesser, der die Laufzeit eines Sende- und Empfangslichtstrahls auswertet, sind die großen Intensitätsunterschiede, die der Empfangslichtstrahl in Abhängigkeit von der jeweiligen Messentfernung besitzen kann. Je größer die Entfernung zwischen dem Lichtsender/Lichtempfänger und dem Objekt ist, desto geringer ist die Signalleistung, mit der der Empfangslichtstrahl den Lichtempfänger erreicht. Um einen großen Messbereich zu ermöglichen, muss der Lichtempfänger einerseits die leistungsstarken Empfangssignale aus kurzen Entfernungen und andererseits die leistungsschwachen Empfangssignale aus großen Entfernungen verarbeiten können. Ist die Empfangsleistung zu groß, wird der Lichtdetektor übersteuert, was in extremen Fällen zu einer Zerstörung des Lichtempfängers führen kann. Selbst wenn der Lichtempfänger nicht zerstört oder geschädigt wird, ist bei einer zu hohen Empfangssignalleistung keine zuverlässige Entfernungsbestimmung möglich. Ist die Empfangsleistung dagegen zu schwach, lässt sich das Empfangssignal nicht mehr von unvermeidlichen Störungen, wie dem Umgebungs- und Detektorrauschen, unterscheiden.

Bei dem bekannten Laserscanner sitzt der Lichtsender koaxial vor der Empfangsoptik und schattet deren Zentralbereich ab. Aufgrund dessen erreicht der Empfangslichtstrahl die Empfangsoptik nur in Form eines Lichtrings, aus dem der zentrale Bereich "herausgeschnitten" ist. Dieser Lichtring wird von einem Linsenelement auf die Lochblende abgebildet. Wenn der Durchmesser des abgebildeten Lichtrings kleiner ist als der Durchmesser der Lochblende, passt der Lichtring vollständig durch die Lochblende hindurch. In diesem Fall kann der gesamte Empfangslichtstrahl mit Ausnahme des abgeschatteten zentralen Bereichs auf einen nach der Lochblende angeordneten Lichtdetektor fallen. Ist der Durchmesser des Lichtrings jedoch größer als der Durchmesser der Lochblende, begrenzt die Lochblende die Lichtmenge, die den Lichtdetektor erreicht. Aufgrund der Abbildungseigenschaften der Empfangsoptik hängt der Durchmesser des Lichtrings von der Entfernung ab, die der Empfangslichtstrahl zurücklegt. Für große Entfernungen ist der Durchmesser des Lichtrings klein. Zu kurzen Entfernungen hin nimmt der Durchmesser des Lichtrings zu. Infolge dieses Verhaltens wird ein Empfangslichtstrahl aus großer Entfernung vollständig (mit Ausnahme der zentralen Abschattung durch das lichtundurchlässige Element) auf dem Lichtdetektor abgebildet, während ein Empfangslichtstrahl aus einer kurzen Entfernung den Lichtdetektor nur teilweise erreicht. Auf diese Weise werden die unterschiedlichen Empfangssignalleistungen in Abhängigkeit von der Entfernung etwas ausgeglichen.

Es hat sich allerdings gezeigt, dass diese Art des Ausgleichs nicht optimal ist, weil der Lichtring zu kürzeren Entfernungen hin so groß werden kann, dass aufgrund der zentralen Abschattung überhaupt kein Empfangslicht mehr durch die Lochblende hindurchtreten kann. Infolgedessen ist der Messbereich des bekannten Laserscanners zu kurzen Entfernungen hin nachteilig begrenzt.

Eine Vorrichtung der eingangs genannten Art wird in der DE 103 36 458 A1 vorgeschlagen. Das erste Linsenelement wird zentral durch einen Blende abgeschattet, aus welcher der Sendelichtstrahl austritt. Als Lochblende dient die Stirnfläche einer Lichtleitfaser. Das zweite Linsenelement ist eine durchlochte Lichtkonvergenzlinse, welche für kurze Entfernungen des Objekts den Emfangslichtstrahl auf die Stirnfläche der Lichtleitfaser fokussiert. Damit wird zwar sichergestellt, dass ausreichend Empfangslicht vorhanden ist, jedoch bleiben die Empfangssignalleistungen unterschiedlich.

Aufgabe der vorliegenden Erfindung ist es, eine Vorrichtung der eingangs genannten Art anzugeben, die die Bestimmung einer Entfernung über einen erweiterten Messbereich hinweg ermöglicht. Die Bestimmung der Entfernung soll bei kurzen und bei großen Entfernungen mit hoher Genauigkeit möglich sein.

Diese Aufgabe wird erfindungsgemäß durch eine Vorrichtung mit den Merkmalen des Anspruches 1 gelöst. Vorteilhafte Ausgestaltungen sind Gegenstand der Unteransprüche.

Die neue Vorrichtung besitzt eine Maske aus einem lichtundurchlässigen Material, die den Übergangsbereich teilweise abdeckt und den Zentralbereich frei lässt. Vorzugsweise deckt die Maske auch den Peripheriebereich ab. Mit dieser Ausgestaltung lässt sich die Empfangsleistungscharakteristik der neuen Vorrichtung optimieren, indem die (hohe) Lichtintensität eines Empfangslichtstrahls mit Hilfe der Maske begrenzt wird. Andererseits lässt die Maske den Zentralbereich frei, so dass Empfangslichtstrahlen aus größeren Entfernungen weiterhin unbeeinflusst bleiben.

Vorzugsweise deckt die Maske den Übergangsbereich überwiegend ab. Diese Ausgestaltung ist vorteilhaft, weil die Lichtmenge der Empfangslichtstrahlen mit abnehmender Entfernung sehr stark ansteigt. Mit einer großflächigen Maske lässt sich dieser starke Anstieg bei kurzen Entfernungen sehr einfach und effizient begrenzen.

Die Maske besitzt zumindest eine schlitzförmige Öffnung, die im Übergangsbereich angeordnet ist. Diese schlitzförmige Öffnung in der Maske ermöglicht auf sehr einfache und kostengünstige Weise eine effiziente Anpassung der Empfangslichtleistung. Insbesondere ist es mit Hilfe einer schlitzförmigen Öffnung leicht möglich, Teile des ringförmigen Empfangslichtstrahls gezielt "herauszuschneiden", um sie dem nachfolgenden Lichtdetektor zuzuführen. Vorzugsweise verläuft die schlitzförmige Öffnung radial vom Zentralbereich zum Peripheriebereich. Das Empfangslicht aus kürzeren Entfernungen weitgehend unabhängig von der jeweiligen Größe und Lage des Lichtrings durch die Maske hindurchtreten kann. Diese Ausgestaltung ermöglicht eine sehr gleichmäßige Anpassung der Empfangslichtleistung bei kurzen Entfernungen.

Vorzugsweise besitzt das hutförmige zweite Linsenelement eine weitgehend ebene Rückseite. Vorzugsweise ist die Maske auf der ebenen Rückseite angeordnet. Diese Ausgestaltung trägt zu einer einfachen und kostengünstigen Realisierung bei. Darüber hinaus lässt sich mit dieser Ausgestaltung der Einfluss des zweiten Linsenelements auf Empfangslichtstrahlen aus größeren Entfernungen reduzieren, so dass der maximale Messbereich durch das zweite Linsenelement nicht nachteilig beeinflusst wird.

Das zweite Linsenelement ist also ein komplex geformtes Linsenelement. Es besitzt im Querschnitt einen relativ dicken Zentralbereich und einen relativ dünnen Peripheriebereich, zwischen denen ein (vorzugsweise gekrümmter) Übergangsbereich angeordnet ist. Aufgrund der komplexen Hutform ist der Übergangsbereich steiler als der Zentralbereich und der Peripheriebereich, wenn man den Querschnitt des zweiten Linsenelements betrachtet. Diese Linsenform mit radial nach außen variierenden Steilheiten, wobei der Übergangsbereich eine im Querschnitt deutlich höhere Steilheit besitzt, hat zur Folge, dass Lichtstrahlen, die im Übergangsbereich auf das Linsenelement fallen, anders gebrochen werden als Lichtstrahlen, die auf den Zentralbereich des Linsenelements fallen. Mit Hilfe eines solchen, positionsabhängigen Verhaltens ist es möglich, Lichtstrahlen aus unterschiedlichen Entfernungen verschieden stark abzulenken. Insbesondere kann das neue zweite Linsenelement dafür sorgen, dass Empfangslichtstrahlen aus kürzeren Entfernungen, die bei dem bekannten Laserscanner nahezu vollständig unterdrückt würden, nun mit einem gewissen Lichtanteil durch die Lochblende hindurchtreten können. Die neue Vorrichtung besitzt damit einen erweiterten Messbereich zu kurzen Entfernungen hin.

Vorzugsweise ist das lichtundurchlässige Element ein Bestandteil des Lichtsenders, der koaxial zu dem Lichtempfänger vor diesem angeordnet ist. Diese koaxiale Anordnung ermöglicht es, auf Strahlteiler im Sende- und Empfangslichtweg zu verzichten und infolgedessen lässt sich die neue Vorrichtung sehr kostengünstig und kompakt realisieren. Die Messgenauigkeit der neuen Vorrichtung ist über den gesamten Messbereich hoch.

In einer bevorzugten Ausgestaltung weist das hutformige zweite Linsenelement einen im Querschnitt dickeren Zentralbereich, einen im Querschnitt dünneren Peripheriebereich und einen Übergangsbereich auf, der den dickeren Zentralbereich und den dünneren Peripheriebereich verbindet, wobei der Zentralbereich im Querschnitt weitgehend eben ist. Vorzugsweise ist der Zentralbereich exakt eben und der Übergangsbereich schließt sich mit einem S-förmigen Verlauf (im Querschnitt) an den Zentralbereich an.

Diese Ausgestaltung besitzt den Vorteil, dass Empfangslichtstrahlen, die durch den Zentralbereich hindurchtreten, weitgehend oder sogar vollständig unbeeinflusst bleiben. Der Einfluss des zweiten Linsenelements kann somit auf Empfangslichtstrahlen aus kürzeren Entfernungen begrenzt werden. Für Empfangslichtstrahlen aus größeren Entfernungen ist das neue Linsenelement zumindest weitgehend funktionslos. Diese Ausgestaltung trägt in vorteilhafter Weise dazu bei, eine optimale Empfangsleistungscharakteristik für einen erweiterten Messbereich zu realisieren.

In einer weiteren Ausgestaltung ist das zweite Linsenelement eine Ringlinse mit einer Durchgangsöffnung, die den Zentralbereich bildet. Dabei ist der Zentralbereich ein "Loch", das in der Mitte des Linsenelements angeordnet ist. Die Lichtstrahlen, die das zweite Linsenelement im Zentralbereich passieren, werden von dem Linsenelement nicht beeinflusst. Vorteilhafterweise erfolgt hier weder eine Dämpfung noch eine Brechung.

In einer alternativen Ausgestaltung ist das zweite Linsenelement demgegenüber ein Vollkörper, d.h. der Zentralbereich ist ebenfalls mit einem lichtdurchlässigen Material "gefüllt". Diese Ausgestaltung besitzt den Vorteil, dass das komplexe Linsenelement einfacher, kostengünstiger und stabiler hergestellt werden kann.

Vorzugsweise ist Lochblende an einem vom ersten Linsenelement definierten Brennpunkt angeordnet. Diese Ausgestaltung trägt dazu bei, den Messbereich zu großen Entfernungen hin zu optimieren, indem eine nachteilige Abschattung von Empfangslichtstrahlen aus größeren Entfernungen vermieden wird. Alle Empfangslichtstrahlen aus großen Entfernungen werden in dieser Ausgestaltung auf die Lochblende fokussiert.

Vorzugsweise besitzt die Lochblende eine zentrale Öffnung und eine weitere schlitzförmige Öffnung, die radial zu der zentralen Öffnung angeordnet ist. Vorzugsweise sind die schlitzförmigen Öffnungen in der Lochblende und in der Maske weitgehend deckungsgleich zueinander angeordnet. Diese Ausgestaltung führt einen weiteren Freiheitsgrad ein, mit dessen Hilfe sich die Empfangsleistungskurve für einen großen Entfernungsmessbereich optimieren lässt. Der weitere Freiheitsgrad ermöglicht ferner eine einfachere und kostengünstigere Gestaltung des zweiten Linsenelements.

Vorzugsweise weist der Lichtempfänger einen ersten und zumindest einen zweiten Lichtdetektor auf, wobei der erste Lichtdetektor ein erstes elektrisches Signal in Abhängigkeit von dem Empfangslichtstrahl erzeugt, und wobei der zweite Lichtdetektor ein zweites elektrisches Signal erzeugt, das für eine Farbinformation des Objekts repräsentativ ist.

Das erste elektrische Signal ist insbesondere für die Helligkeit des Messpunktes repräsentativ und wird vorteilhaft in an sich bekannter Weise zur Bestimmung der Entfernung verwendet. Der zweite Lichtdetektor ist ein Farbdetektor, der üblicherweise drei oder mehr lichtempfindliche Pixel beinhaltet, die für verschiedene Wellenlängen empfindlich sind. Aufgrund der wellenlängenabhängigen Empfindlichkeit erhält man eine Farbseparation. In bevorzugten Ausführungsbeispielen liefert der Farbdetektor eine Farbinformation, die für den roten Wellenlängenbereich, den grünen Wellenlängenbereich und den blauen Wellenlängenbereich repräsentativ ist. Diese Ausgestaltung ermöglicht es, in Ergänzung zu der Entfernungsinformation aus dem ersten elektrischen Signal ein optisches Farbbild von dem Messpunkt zu erhalten. Die zusätzliche Information trägt dazu bei, die Messumgebung zu dokumentieren und die Entfernungsmesswerte einfacher zu interpretieren.

Vorzugsweise besitzt die Vorrichtung einen Drehspiegel mit einer Drehrichtung, um den Sendelichtstrahl über das Objekt zu führen, wobei der zweite Lichtdetektor in Drehrichtung versetzt angeordnet ist. In dieser Ausgestaltung sind der erste und der zweite Lichtdetektor räumlich so versetzt zueinander angeordnet, dass sie über den Drehspiegel auf verschiedene Objektpunkte innerhalb des umgebenden Raumbereichs blicken.

Im Gegensatz dazu schlägt die eingangs genannte DE 20 2006 005 643 U1 beispielsweise eine Vorrichtung vor, bei der eine Bildaufnahmeeinheit zum Aufnehmen eines optischen Bildes auf denselben Objektpunkt ausgerichtet wird, wie der Sendelichtstrahl. Die hier bevorzugte Ausgestaltung, die auch für sich genommen eine erfinderische Weiterbildung des bekannten Laserscanners darstellt, verzichtet bewusst darauf, den Sendelichtstrahl und die Blickrichtung des zweiten Lichtdetektors auf denselben Objektpunkt auszurichten. Dabei macht sich die vorliegende Ausgestaltung zunutze, dass die Blickrichtung des zweiten Lichtdetektors der Blickrichtung des ersten Lichtdetektors bzw. des Sendelichtstrahls aufgrund der Drehung des Drehspiegels mit einer zeitlichen Verzögerung folgt. Aufgrund der festen Anordnung des Lichtsenders und der beiden Lichtdetektoren relativ zueinander sieht der zweite Lichtdetektor einen vermessenen Objektpunkt mit einer zeitlichen Verzögerung (oder Vorauseilung). Diese Ausgestaltung besitzt den Vorteil; dass das optische Bild des Raumbereichs im gleichen Scanumlauf aufgenommen werden kann, wie die Entfernungen zu den Objektpunkten bestimmt werden. Darüber hinaus ermöglicht diese Ausgestaltung eine sehr kompakte und bedienungsfreundliche Realisierung. Vorzugsweise weist die Lochblende einen Lochblendenkörper auf, an dem der zweite Lichtdetektor angeordnet ist. Diese Ausgestaltung ermöglicht eine sehr kompakte und robuste Bauweise. Außerdem ist die Empfangsleistungscharakteristik für den zweiten Lichtdetektor hier unabhängig von der Empfangsleistungscharakteristik für den ersten Lichtdetektor, d.h. das Empfangslicht für den zweiten Lichtdetektor wird durch die oben beschriebenen Maßnahmen weniger oder gar nicht beeinflusst. Dies ist von Vorteil, weil das Empfangslicht für den zweiten Lichtdetektor nicht die starken, entfemungsabhängigen Intensitätsunterschiede aufweist wie der Empfangslichtstrahl. Vorzugsweise besitzt die Vorrichtung ein Grafikdisplay, das dazu ausgebildet ist, ein Entfernungsbild und/oder ein optisches Bild des Objekts anzuzeigen. Diese Ausgestaltung ist besonders vorteilhaft für einen Laserscanner der eingangs beschriebenen Art, der aufgrund seiner Scanfähigkeit eine sehr große Menge an Messdaten und/oder optischen Bilddaten erzeugt. Ein Grafikdisplay ermöglicht es, diese Datenmenge direkt (also ohne ergänzendes Notebook etc.) an der Vorrichtung selbst darzustellen. Der Benutzer kann sich somit ein schnelles Bild über die Qualität, Vollständigkeit und Relevanz der Messwerte machen. Darüber hinaus kann ein solches Grafikdisplay sehr vorteilhaft als Benutzerschnittstelle zur Dateneingabe für eine Parametrierung etc. verwendet werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: einen Laserscanner nach einem bevorzugten Ausführungsbeispiel der Erfindung,

- Figur 2: die Empfangsleistungscharakteristik des Laserscanners aus Figur 1 in einer idealisierten Darstellung,
- Figur 3: die Empfangsoptik des Laserscanners aus Figur 1 in einer vereinfachten Darstellung,
- Figur 4: einen Lochblendenkörper mit der Lochblende der Empfangsoptik aus Figur 3 in einer ersten Betriebssituation,
- Figur 5: die Lochblende aus Figur 4 in einer zweiten Betriebssituation, und
- Figur 6: ein bevorzugtes Ausführungsbeispiel für eine Maske, die in der Empfangsoptik aus Figur 3 Verwendung findet.

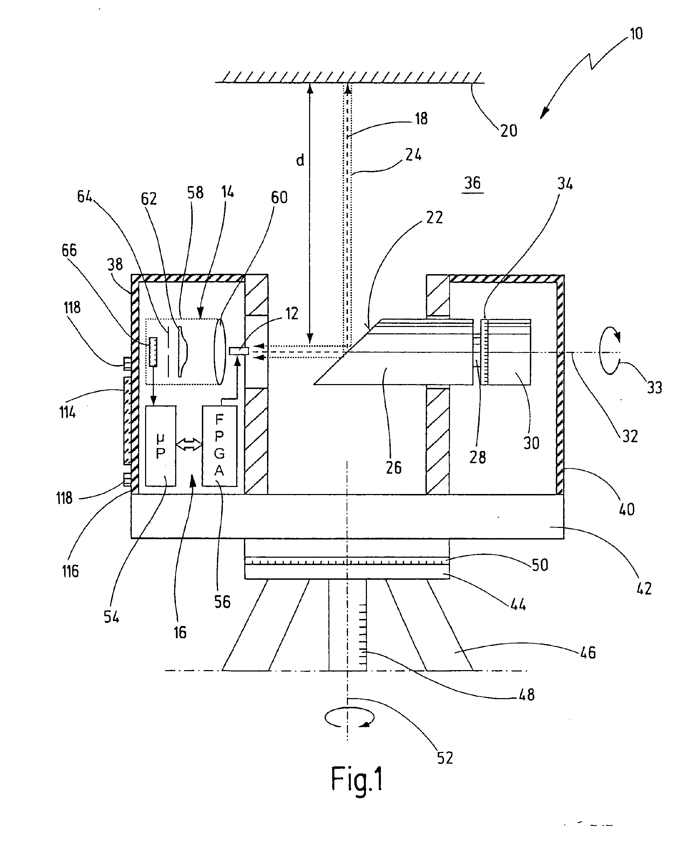

In Figur 1 ist ein Laserscanner in seiner Gesamtheit mit der Bezugsziffer 10 bezeichnet. Der Laserscanner 10 ist ein bevorzugtes Ausführungsbeispiel für eine Vorrichtung nach der vorliegenden Erfindung. Die neue Vorrichtung kann jedoch auch ein einfacher, eindimensional messender Entfernungsmesser sein, der die Entfernung zu einem Objekt mit Hilfe eines Sendelichtstrahls und eines Empfangslichtstrahls bestimmt. Die Erfindung ist auch nicht auf die - bevorzugte - Verwendung von Lichtstrahlen im engeren Sinne (Wellenlängen zwischen 300 und 1000 nm) beschränkt, sondern kann prinzipiell auch mit elektromagnetischen Wellen aus einem anderen Wellenlängenbereich realisiert werden, so lange eine quasi optische Ausbreitung vorliegt. Der hier verwendete Begriff Lichtstrahl umfasst daher auch solche elektromagnetischen Wellen.

Der Laserscanner 10 beinhaltet einen Lichtsender 12 und einen Lichtempfänger 14, die mit einer Auswerte- und Steuereinheit 16 verbunden sind. In dem bevorzugten Ausführungsbeispiel beinhaltet der Lichtsender 12 eine Laserdiode, die dazu ausgebildet ist, einen Laserstrahl 18 mit einer Wellenlänge von etwa 790 nm als Sendelichtstrahl zu erzeugen. Der Sendelichtstrahl 18 wird ausgesendet, um einen Objektpunkt an einem Objekt 20 zu beleuchten. In einem bevorzugten Ausführungsbeispiel ist der Sendelichtstrahl 18 mit einem rechteckwellenförmigen Modulationssignal amplitudenmoduliert, um durch Auswertung von Phaseninformationen die Entfernung d zu dem beleuchteten Objektpunkt zu bestimmen. Ein bevorzugtes Modulationssignal ist in einer parallelen Patentanmeldung der vorliegenden Anmelderin beschrieben. Alternativ hierzu kann der Sendelichtstrahl 18 mit einem sinusförmigen Modulationssignal moduliert sein und/oder der Sendelichtstrahl 18 kann pulsweise ausgesendet werden, um die Entfernung d anhand eines Pulslaufzeitverfahrens zu bestimmen.

Der Sendelichtstrahl 18 wird hier über einen Spiegel 22 zu dem Objekt 20 umgelenkt. Mit der Bezugsziffer 24 ist ein Empfangslichtstrahl bezeichnet, der von dem Objekt 20 reflektiert wird und der über den Spiegel 22 zu dem Empfänger 14 umgelenkt wird. Der Spiegel 22 ist hier an der vorderen Stirnfläche eines Zylinders 26 angeordnet, der über eine Welle 28 mit einem Drehantrieb 30 verbunden ist. Mit Hilfe des Drehantriebs 30 kann der Spiegel 22 um eine Drehachse 32 gedreht werden. Die Drehrichtung ist hier bei Bezugsziffer 33 angedeutet. Die jeweilige Drehstellung des Spiegels 22 lässt sich mit Hilfe eines Encoders 34 bestimmen. Die Ausgangssignale des Encoders 34 sind ebenfalls der Auswerte- und Steuereinheit 16 zugeführt, was hier aus Gründen der Übersichtlichkeit nicht dargestellt ist.

In dem bevorzugten Ausführungsbeispiel ist die Drehachse 32 horizontal angeordnet und der Spiegel 22 ist gegenüber der Drehachse 32 in einem Winkel von etwa 45° geneigt. Eine Drehung des Spiegels 22 um die Horizontalachse 32 hat daher zur Folge, dass der Sendelichtstrahl 18 entlang einer Vertikalebene (also in der Elevation) abgelenkt wird. Der Sendelichtstrahl 18 bildet bei drehendem Spiegel 22 einen Fächer, mit dem der Raumbereich 36 in der Vertikalebene abgetastet wird.

Der Laserscanner 10 besitzt hier eine Gehäusestruktur, die im Wesentlichen zwei Gehäuseteile 3 8, 40 aufweist. Die Gehäuseteile 38, 40 sind auf einer gemeinsamen Grundplatte 42 angeordnet. Der Sender 12, der Empfänger 14 und die Auswerte- und Steuereinheit 16 sind in dem in Figur 1 links dargestellten Gehäuseteil 38 untergebracht. Der in Figur 1 rechts dargestellte Gehäuseteil beherbergt den Drehantrieb mit dem Encoder 34 und dem Zylinder 26, wobei der Zylinder 26 mit dem Spiegel 22 aus dem Gehäuseteil 40 herausragt, so dass der Spiegel 22 etwa mittig zwischen beiden Gehäuseteilen 38, 40 angeordnet ist.

Die Grundplatte 42 ist auf einem Drehantrieb 44 angeordnet, der auf einem Stativ 46 sitzt. Das Stativ 46 ist in der Höhe verstellbar und besitzt eine Skalierung 48, um eine reproduzierbare Höheneinstellung vornehmen zu können. Mit der Bezugsziffer 50 ist ein weiterer Encoder bezeichnet, mit dessen Hilfe sich die Drehposition des Drehantriebs 44 bestimmen lässt. Die Ausgangssignale-des Encoders 50 sind ebenfalls der Auswerte- und Steuereinheit 16 zugeführt (hier nicht dargestellt).

Der Drehantrieb 44 ermöglicht eine Drehung des Laserscanners 10 um eine vertikale Achse 52, die zusammen mit der Drehachse 32 einen Achsenschnittpunkt definiert. Der Achsenschnittpunkt liegt hier etwa mittig auf dem Spiegel 22 und definiert in bevorzugten Ausführungsbeispielen den Ursprung des Koordinatensystems, auf das sämtliche Entfernungsmesswerte d bezogen sind. Mit Hilfe des Drehantriebs 44 kann der vertikale "Abtastfächer" um 360° im Azimut gedreht werden. Damit kann der Sendelichtstrahl 18 praktisch jeden Objektpunkt in der Umgebung des Scanners 10 beleuchten. Eine Abschattung findet lediglich nach unten hin durch die Grundplatte 42 statt, so dass der Blickwinkel des Laserscanners 10 nach unten hin etwas begrenzt ist.

Die Auswerte- und Steuereinheit 16 beinhaltet hier einen Mikroprozessor 54 und ein FPGA (field programmable gate array) 56. Das FPGA 56 erzeugt hier das binäre rechteckwellenförmige Modulationssignal, mit dem die Laserdiode des Lichtsenders 12 angesteuert wird. Der Mikroprozessor 54 liest digitalisierte Empfangsdaten des Lichtempfängers 14 ein und bestimmt anhand dieser Daten die Entfernung d zwischen dem Laserscanner 10 und dem Objekt 20. Der Mikroprozessor 54 und das FPGA 56 kommunizieren miteinander, wobei der Mikroprozessor 54 u. a. die Phaseninformation des Sendelichtstrahls für die Laufzeitbestimmung erhält.

Die Empfangsoptik 58 des Lichtempfängers 14 beinhaltet zumindest ein erstes Linsenelement 60 (es können auch mehrere erste Linsenelemente sein, die zusammen die Funktion des nachfolgend beschriebenen ersten Linsenelements erfüllen), ein zweites Linsenelement 62 und eine Lochblende 64. Hinter der Lochblende 64 ist der Lichtdetektor 66 angeordnet, der den Empfangslichtstrahl 24 detektiert. Wie leicht nachzuvollziehen ist, schattet der Lichtsender 12 den Empfangslichtstrahl 24 in einem zentralen Bereich der Empfangsoptik ab, da der Lichtsender 12 hier koaxial vor dem Lichtempfänger 14 angeordnet ist. Um diese Abschattung bildlich darzustellen, ist der Empfangslichtstrahl 24 "doppelt" und übertrieben breit im Vergleich zu dem Sendelichtstrahl 18 dargestellt. Tatsächlich erreicht der Empfangslichtstrahl 24 den Lichtdetektor 66 hier in Form eines Lichtrings, dessen inneres Zentrum durch den Lichtsender 12 abgeschattet wird.

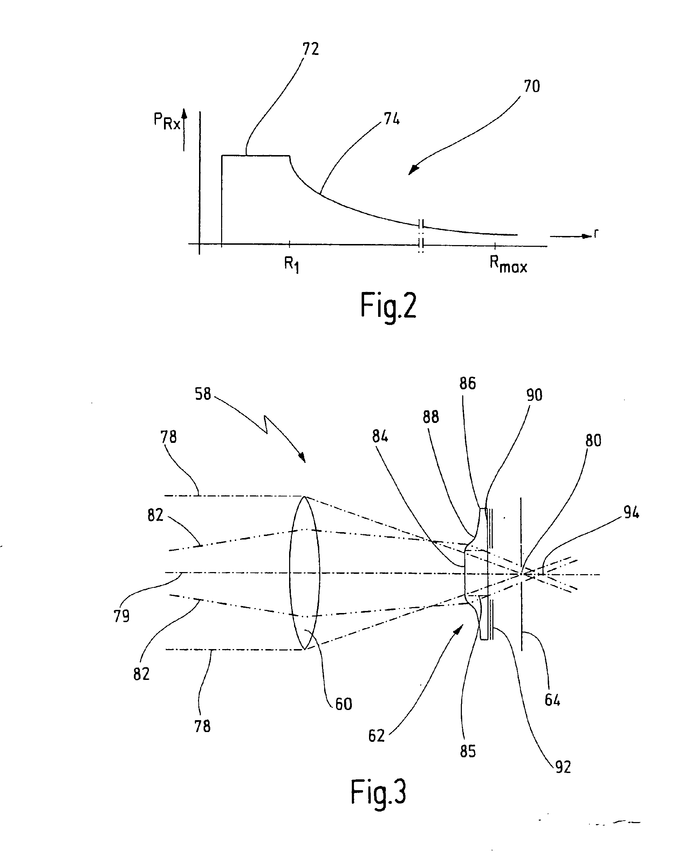

Figur 2 zeigt eine idealisierte Empfangsleistungscharakteristik des Lichtempfängers 14 in Abhängigkeit von der Messentfernung r. Wie man leicht erkennen kann, wird bis zu einer Entfernung von etwa 0,5 Metern überhaupt kein Empfangslichtstrahl 24 detektiert. Mit anderen Worten ist der Lichtempfänger 14 für Ziele in dieser Entfernung "blind" bzw. nicht empfangsbereit. Diese Blindheit ist hier bewusst realisiert, um insbesondere ein direktes Übersprechen des Sendelichtstrahls 18 in Folge von Streueffekten zu unterdrücken. Die Einschränkung des Messbereichs kann für eine so kurze Entfernung in Kauf genommen werden.

Ab der unteren Messbereichsgrenze von etwa 0,5 Metern "springt" die Empfangsleistungscharakteristik auf einen Maximalwert. Dieser Maximalwert ist über einen Bereich 72 weitgehend konstant, d.h. Empfangslichtstrahlen 24 aus einer Entfernung, die innerhalb des ersten Entfernungsbereichs 72 liegt, erreichen den Lichtdetektor 66 mit weitgehend gleicher Empfangsleistung; obwohl die Empfangsleistung prinzipiell mit zunehmender Entfernung abnimmt. Das Plateau im Entfernungsbereich 72 wird hier in erster Linie mit Hilfe der nachfolgend beschriebenen Empfangsoptik realisiert, indem die weit höhere Leistung der Empfangslichtstrahlen aus kurzen Entfernungen mit Hilfe der Empfangsoptik auf optische Weise begrenzt wird.

An das Plateau 72 schließt sich ab einer Entfernung Ri ein hyperbelartiger Kurvenverlauf an, nach dem die Empfangsleistung mit weiter steigender Entfernung stetig abnimmt. Der Kurvenverlauf im Entfernungsbereich 74 entspricht der systembedingten Abnahme der Empfangsleistung. Ab einer Entfernung Rₘₐₓ ist die Empfangsleistung so gering, dass eine zuverlässige Entfernungsbestimmung nicht mehr möglich ist. In einem bevorzugten Ausführungsbeispiel des bevorzugten Laserscanners liegt die Entfernung Rₘₐ* bei etwa 70 Metern.

Figur 3 verdeutlicht die Funktionsweise der Empfangsoptik 58. Gleiche Bezugszeichen bezeichnen dieselben Elemente wie zuvor.

Die Lochblende 64 ist hier im Brennpunkt 80 des Abbildungssystems angeordnet, dessen Eigenschaften im Wesentlichen von dem ersten Linsenelement 60 (oder der Gruppe von ersten Linsenelementen) bestimmt wird. Verdeutlicht ist dies anhand der Strahlen 78, die als Parallelstrahlen auf das erste Linsenelement 60 fallen und von dem Linsenelement 60 so abgelenkt werden, dass sie sich im Brennpunkt 80 treffen. Die Annahme, dass die Strahlen 78 das Linsenelement 60 als Parallelstrahlen erreichen, trifft für große Entfernungen mit guter Nährung zu.

Für kleinere Entfernungen trifft die Annahme von Parallelstrahlen jedoch nicht zu. Beispielhaft ist ein Strahlenpaar 82 dargestellt, das divergierend nach außen läuft und auf das Linsenelement 60 trifft. Die Strahlen 82 werden von dem Linsenelement 60 ebenfalls abgelenkt, jedoch nicht in dem Brennpunkt 80 fokussiert. Infolgedessen könnten die Strahlen 82 ohne das zweite Linsenelement 62 nicht durch die Lochblende 64 hindurchtreten.

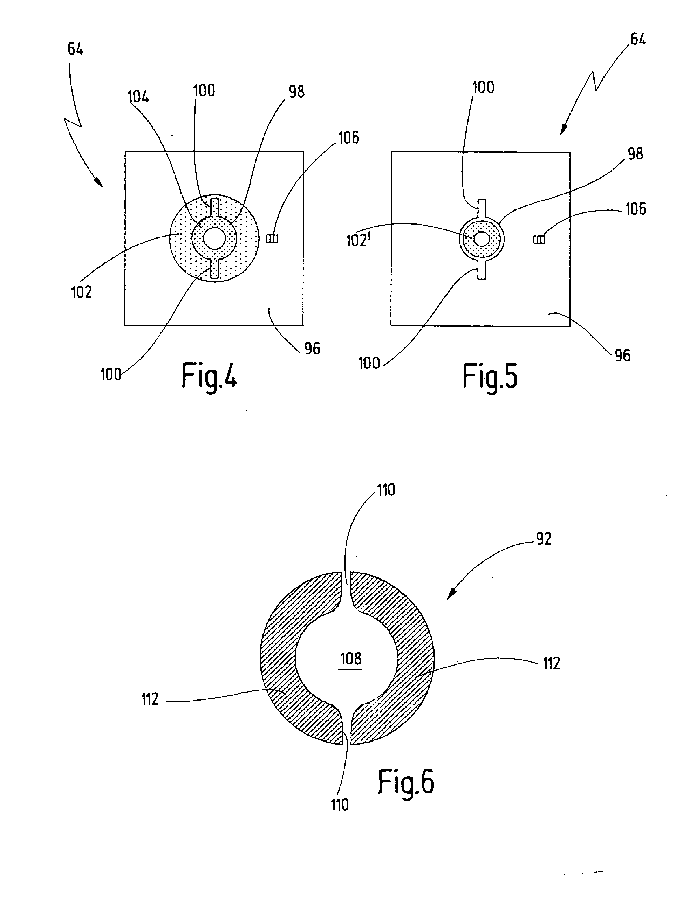

Das zweite Linsenelement 62 ist zwischen dem ersten Linsenelement 60 und der Lochblende 64 angeordnet. Es besitzt einen hutförmigen Querschnitt mit einem dickeren Zentralbereich 84, einem dünnen Peripheriebereich 86 und einem Übergangsbereich 88, der den Zentralbereich 84 und den Peripheriebereich 86 verbindet. Das zweite Linsenelement 60 ist weitgehend senkrecht zur optischen Achse 79 angeordnet, wobei die optische Achse der Empfangsoptik in etwa mittig durch das zweite Linsenelement 60 hindurchtritt. In dem bevorzugten Ausführungsbeispiel ist der Zentralbereich 84 eben. Auch der äußere Peripheriebereich 86 ist in bevorzugten Ausführungsbeispielen eben. Dagegen besitzt der Übergangsbereich 88 eine im Querschnitt hier etwa S-förmige Krümmung, wobei der Krümmungsradius bzw. die Steigung des Kurvenverlaufs ausgehend von dem Zentralbereich 84 zunächst kontinuierlich zunimmt, um dann zum Peripheriebereich hin wieder abzunehmen. Die Rückseite 90 des zweiten Linsenelements 62 ist eben. In dem bevorzugten Ausführungsbeispiel ist an der Rückseite 90 eine Maske 92 (Figur 6) angeordnet, die aus einem lichtundurchlässigen Material besteht.

Wie in Figur 3 dargestellt ist, ist das zweite Linsenelement 62 so angeordnet, dass die Brennpunktstrahlen 80 durch den ebenen Zentralbereich 84 hindurchtreten und infolgedessen weitgehend unbeeinflusst bleiben. In einem Ausführungsbeispiel ist der Zentralbereich 84 eine Durchgangsöffnung, die bei Bezugsziffer 85 angedeutet ist, und das zweite Linsenelement ist eine Ringlinse. In anderen Ausführungsbeispielen ist das zweite Linsenelement 84 ein - vorzugsweise einstückiger - Vollkörper aus transparentem Material.

Aufgrund der ebenen Vorderseite und Rückseite des zweiten Linsenelements 62 im Zentralbereich beeinflusst das zweite Linsenelement 62 die Brennpunktstrahlen 80 gar nicht oder allenfalls wie eine flache Scheibe. Dagegen treffen die Strahlen 82 im gekrümmten Übergangsbereich 88 auf das Linsenelement 62. Das Linsenelement 62 ist im Übergangsbereich so ausgebildet, dass die hier auftreffenden Strahlen 82 so abgelenkt werden, dass sie durch die Lochblende 64 hindurchtreten. Je weiter außen die Strahlen auf den Übergangsbereicht fallen, desto stärker werden sie auf die Lochblende 64 hin abgelenkt. Allerdings liegt der Brennpunkt 94 für die abgelenkten Strahlen 82 hinter der Lochblende 64, so dass ein durch die Strahlen 82 übertragenes Bild auf der Lochblende 64 unscharf erscheint. Je näher ein Objektpunkt an der Empfangsoptik 58 liegt, desto größer ist die Unscharfe.

Die Figuren 4 und 5 zeigen die Auswirkung der Empfangsoptik 58 anhand von zwei Beispielen. Dargestellt ist die Draufsicht auf einen Lochblendenträger 96, in dem eine kreisförmige Blendenöffnung 98 sowie zwei schlitzförmige Öffnungen 100 angeordnet sind. Die schlitzförmigen Öffnungen 100 verlaufen von der kreisförmigen, zentralen Öffnung 98 radial nach außen. Zusammen bilden die zentrale kreisförmige Öffnung 98 und die schlitzförmigen Öffnungen 100 eine kombinierte Blendenöffnung mit einem zusammenhängenden "strichpunktförmigen" Öffnungsbereich. Mit der Bezugsziffer 102 ist ein Lichtring bezeichnet, der durch die Linsenelemente 60, 62 auf den Lochblendenträger 96 abgebildet wird. Figur 4 zeigt einen Fall, in dem der Empfangslichtstrahl 24 aus einer relativ geringen Entfernung auf die Empfangsoptik 58 trifft. Dies hat zur Folge, dass der Durchmesser des Lichtrings 102 groß ist und nur ein Teil 104 (etwas dunkler dargestellt) des Lichtrings 102 durch die kombinierte Blendenöffnung 98 hindurchtreten kann. Der über die Blendenöffnung 98 hinausreichende Teil des Lichtrings 102 wird durch die Blende 64 abgeblockt. Dadurch wird die Empfangsleistung des Empfangslichtstrahls 24 reduziert.

Figur 5 zeigt einen zweiten Fall, bei dem der Empfangslichtstrahl 24 aus einer größeren Entfernung auf die Empfangsoptik 58 trifft. Aufgrund der größeren Entfernung wird der Lichtring 102' hier vollständig in die Blendenöffnung 98 abgebildet, d.h. die gesamte Lichtmenge, die die Empfangsoptik 58 erreicht, kann durch die Blende 64 hindurchtreten und den Lichtdetektor 66 erreichen.

Mit der Bezugsziffer 106 ist ein zweiter Lichtdetektor bezeichnet, der hier drei lichtempfindliche Pixel beinhaltet, die für verschiedene Wellenlängen empfindlich sind. Alternativ kann der zweite Lichtdetektor ein flächiger Bildsensor sein, der für verschiedene Wellenlängen empfindlich ist. Letzteres ist vorteilhaft, um sicherzustellen, dass der zweite Lichtdetektor stets vom Lichtring 102/102' beleuchtet wird. Der Lichtdetektor 106 ist ein Farbdetektor, der in bevorzugten Ausführungsbeispielen des Laserscanners 10 auf dem Lochblendenträger 96 angeordnet ist. Die Anordnung ist so gewählt, dass der zweite Lichtdetektor 106 jeweils mit einer zeitlichen Verzögerung auf einen Objektpunkt am Objekt 20 "blickt", der zuvor von dem Sendelichtstrahl 18 beleuchtet wurde. Die zeitliche Verzögerung ist eine Folge der Drehung des Spiegels 22 um die horizontale Achse 32.

Figur 6 zeigt die Maske 92 auf der Rückseite des zweiten Linsenelements 62 in einer Draufsicht. In dem bevorzugten Ausführungsbeispiel besitzt die Maske einen offenen Zentralbereich 108, der deckungsgleich zu dem ebenen Zentralbereich 84 des Linsenelements 62 angeordnet ist. Der offene Zentralbereich 108 läuft in zwei schlitzförmige Öffnungen 110 aus, die in bevorzugten Ausführungsbeispielen etwa deckungsgleich zu den schlitzförmigen Öffnungen 100 in der Lochblende 64 angeordnet sind. Der dunkel schraffierte Bereich 112 der Maske 92 besteht aus einem lichtundurchlässigen Material. Die Maske 92 ist in bevorzugten Ausführungsbeispielen so auf der Rückseite 90 des Linsenelements 62 befestigt, dass die Bereiche 112 deckungsgleich zu dem Übergangsbereich 88 liegen. Dementsprechend können Lichtstrahlen 82, die im Übergangsbereich 88 auf das Linsenelement 62 treffen, das Linsenelement 62 nur im Bereich der schlitzförmigen Öffnungen 110 verlassen, so dass die Lichtmenge von Empfangslichtstrahlen 24 aus kurzer Entfernung weiter reduziert wird.

Bei dem bevorzugten Laserscanner 10 wirken also vier Elemente zusammen, um die in Figur 2 dargestellte Empfangsleistungscharakteristik zu erzeugen. Diese vier Elemente sind die Lochblende 64 (genauer die kreisförmige Blendenöffnung der Lochblende 64), die schlitzförmigen Fortsätze 100 der Blende 64, das hutförmige zweite Linsenelement 62 und die Maske 92, Das Linsenelement 62 sorgt dafür, dass Empfangslichtstrahlen aus kürzeren Entfernungen durch die kombinierte Blendenöffnung 98 hindurchtreten können. Die hohe Lichtintensität dieser Empfangslichtstrahlen aus kurzer Entfernung wird mit Hilfe der Maske 92 wieder begrenzt, um insgesamt zu der Charakteristik aus Figur 2 zu kommen.

In einem besonders bevorzugten Ausfiihrungsbeispiel, das auch für sich genommen eine erfinderische Weiterbildung des bekannten Laserscanners darstellt, besitzt der neue Laserscanner 10 ein Grafikdisplay 114, das hier an einer äußeren Gehäusewand 116 des Gehäuseteils 38 angeordnet ist. Das Grafikdisplay 114 wird von dem Mikroprozessor 54 angesteuert, und es dient als Benutzerschnittstelle. In einem bevorzugten Ausführungsbeispiel ist das Grafikdisplay 114 ein berührungsempfindlicher Bildschirm (touch screen). Ergänzend oder alternativ hierzu sind an der Gehäusewand 116 im Bereich des Grafikdisplays 114 Bedientasten 118 angeordnet, die hier als so genannte Softkeys ausgebildet sind. Bei diesen Softkeys wechselt die Funktion der Bedientasten 118 in Abhängigkeit von der jeweiligen Anzeige auf dem Grafikdisplay 114.

In dem bevorzugten Ausführungsbeispiel dient das Grafikdisplay 114 ferner dazu, ein Entfernungsbild und/oder ein optisches Bild anzuzeigen, das mit Hilfe des ersten und/oder zweiten Lichtdetektors 66, 106 aufgenommen wurde. Das Entfernungsbild zeigt den aufgenommenen Raumbereich 36 in Form eines Schwarzweißbildes oder in Form einer Falschfarbendarstellung, wobei jeder dargestellte Bildpunkt einen Entfernungsmesswert repräsentiert, der angezeigt werden kann, wenn der entsprechende Bildpunkt mit einem Cursor angefahren wird. Das optische Bild ist vorzugsweise ein Farbbild, das mit Hilfe des zweiten Lichtdetektors 106 aufgenommen wurde und das den Raumbereich 36 zeigt.

In bevorzugten Ausführungsbeispielen ist der Laserscanner 10 dazu ausgebildet, auf dem Grafikdisplay 114 ferner eine SD-Darstellung anzuzeigen, die aus den kombinierten Entfernungs- und Bildinformationen erzeugt wird. Mit Hilfe der Softkeys 118 können außerdem Bedienungsparameter des Laserscanners 10, wie etwa die Sendeleistung des Sendelichtstrahls 18, der Scannbereich im Azimut und in der Elevation oder die Scanauflösung eingestellt werden.

## Patentansprüche

1. Vorrichtung zum Bestimmen einer Entfernung (d) zu einem Objekt (20), mit einem Lichtsender (12) zum Aussenden eines Sendelichtstrahls (18), mit einem Lichtempfänger (14) zum Empfangen eines Empfangslichtstrahls (24), der durch Reflexion des Sendelichtstrahls (18) an dem Objekt (20) entsteht, und mit einer Auswerteeinheit (16) zum Bestimmen der Entfernung (d) anhand einer Laufzeit des Sende- und Empfangslichtstrahls (18, 24), wobei der Lichtempfänger (14) eine Empfangsoptik (58) mit einem ersten Linsenelement (60), einer Lochblende (64) und einem im Querschnitt weitgehend hutförmiges zweites Linsenelement (62) zwischen dem ersten Linsenelement (60) und der Lochblende (64) mit einem Zentralbereich (84), einem Peripheriebereich (86) und einem Übergangsbereich (88) besitzt, und wobei ein lichtundurchlässiges Element (12) einen zentralen Bereich der Empfangsoptik (58) so abschattet, dass der Empfangslichtstrahl (24) in Form eines Lichtrings (102) auf die Lochblende (64) fällt, **dadurch gekennzeichnet, dass** eine Maske (92) aus einem lichtundurchlässigen Material vorgesehen ist, die den Übergangsbereich (88) teilweise abdeckt und den Zentralbereich (84) freilässt, wobei die Maske (92) zumindest eine schlitzförmige Öffnung (110) besitzt, die im Übergangsbereich (88) angeordnet ist und vom Zentralbereich (84) zum Peripheriebereich (86) verläuft.

2. Vorrichtung nach Anspruch 1, **dadurch gekennzeichnet, dass** die Maske (92) den Übergangsbereich (88) überwiegend abdeckt,

3. Vorrichtung nach einem der vorhergehenden Ansprüche, **dadurch gekennzeichnet, dass** das hutförmige zweite Linsenelement (62) eine weitgehend ebene Rückseite (90) besitzt, wobei die Maske (92) auf der ebenen Rückseite (90) angeordnet ist.
